# EUROPÄISCHE PATENTSCHRIFT

(11) **EP 0 502 296 B1**
(45) Veröffentlichungstag und Bekanntmachung des Hinweises auf die Patenterteilung: **04.10.1995**
(21) Anmeldenummer: 92101050.0
(22) Anmeldetag: 23.01.1992
(51) Int. Cl.: B62D 1/18

(54) **Lenksäule für Kraftfahrzeuge**
Steering column for automotive vehicles
Colonne de direction pour véhicules automobiles

(30) Priorität: 02.03.1991 DE 4106735
(43) Veröffentlichungstag der Anmeldung: 09.09.1992
(73) Patentinhaber: Dr.Ing.h.c. F. Porsche Aktiengesellschaft, 70435 Stuttgart (DE)
(72) Erfinder: Faulstroh, Hans-Joachim, W-7251 Wimsheim (DE)

(56) Entgegenhaltungen:
- DE-C- 3 318 935
- US-A- 4 893 518

## Beschreibung

Die Erfindung bezieht sich auf eine axial verstellbare Lenksäule für Kraftfahrzeuge nach dem Oberbegriff des Anspruchs 1.

Bei einer aus der GB-PS 1 129 790 bekannten Bauart einer solchen axial verstellbaren Lenksäule für Kraftfahrzeuge ist auf ein zu einem über eine Konsole an der Fahrzeugkarosserie festgelegten Außenrohr konzentrisch angeordneten und axial verstellbaren Innenrohr ein einen radial auskragenden Ausleger bildender Reiter aufgesetzt. In diesem ist unter axialer Abstützung eine den in axialer Richtung vor- und zurücklaufenden Antrieb des Innenrohres bildende, achsparallel zur Lenksäulenachse angeordnete Antriebsspindel drehbar gelagert. Der den radial auskragenden Ausleger bildende Reiter ist dabei segmentartig ausgebildet und durchgreift mit einem Fußteil ferner eine Ausnehmung im Innenrohr. Dies erfordert zum einen eine entsprechend breite Längsausnehmung im Außenrohr und zum anderen eine entsprechende Präzisionsausnehmung im Innenrohr. Darüber hinaus ist bei dieser Bauart einer axial verstellbaren Lenksäule ein erheblicher Aufwand für die zum Außenrohr koaxiale Führung des Innenrohres notwendig. Ferner ist bei dieser bekannten Lenksäule die Spindel des Spindeltriebes ihrerseits in einem am Außenrohr der Lenksäule montierten Lagerbock geführt und mittels einer einen Teil eines Winkeltriebes bildenden und in dessen Gehäuse gelagerten Spindelmutter angetrieben. Der Antrieb der Spindelmutter erfordert hierbei einen erheblichen technischen Aufwand, ebenso wie auch die Lagerung der Spindel in dem den radial auskragenden Ausleger des Innenrohres bildenden Reiter. Dadurch und auch durch den Umstand, daß diese Bauart einer axial verstellbaren Lenksäule eine Vielzahl von einzeln herzustellenden und zu montierenden Einzelteilen erfordert, werden die Herstellung und die Montage dieser bekannten Lenksäule erheblich verteuert werden.

Bei einer anderen bekannten Bauart einer axial verstellbaren Lenksäule für Kraftfahrzeuge (DE-PS 33 18 935) ist das Innenrohr über einen Längenabschnitt hin als Zahnstange ausgebildet und durch eine am Außenrohr gelagerte, mit dem Zahnstangenabschnitt kämmende Schnecke angetrieben. Diese Antriebsschnecke durchgreift das Außenrohr und mittels eines Winkeltriebs wird sie durch ein von einem zur Lenksäule achsparallel angeordneten Motor angetrieben. Diese Bauart erfordert einen erheblichen Aufwand für die Herstellung des Innenrohres und zusätzlich auch für die Ausbildung und Anordnung der Motor-Getriebeeinheit und weist darüber hinaus infolge des Umstandes, daß keine Verdrehsicherung für das Innenrohr vorgesehen ist, lediglich eine begrenzte Funktionssicherheit auf. Außerdem müssen bei dieser Bauart einer axial verstellbaren Lenksäule toleranzausgleichende Mittel vorgesehen werden, um das Innenrohr einigermaßen koaxial zum Außenrohr führen zu können.

Der Erfindung liegt daher die Aufgabe zugrunde, eine betriebssichere und einfach herstellbare, insbesondere aus wenigen Einzelteilen bestehende Gestaltung einer axial verstellbaren Lenksäule für Kraftfahrzeuge zu schaffen.

Diese Aufgabe wird erfindungsgemäß durch die kennzeichnenden Merkmale des Anspruchs 1 gelöst. Die Ausbildung des Auslegers als radial auskragender stegförmiger Flügel des Innenrohres ermöglicht es, den Ausleger zusammen mit dem Innenrohr einteilig auszubilden und gleichzeitig auch als Träger der Spindelmutter des Spindeltriebes zu verwenden, wodurch sich neben dem Vorteil einer erheblichen Verringerung der erforderlichen Einzelteile infolge der leichteren Zugänglichkeit der außenliegenden Montagestellen auch eine Verringerung der Montagezeit und damit Herstellungskosten sowie auch eine Erhöhung der Betriebssicherheit der Lenksäule insgesamt ergibt. Die Ausbildung des radial auskragenden Auslegers des Innenrohres als wenigstens ein stegförmiger Flügel ergibt in Verbindung mit einer diesem zugeordneten, der Materialdicke der stegförmigen Flügel gegenüber eine lediglich um Spiel- bzw. Spaltbreite größere lichte Weite aufweisenden Längsschlitzausnehmung im Außenrohr neben einer Stabilitätserhöhung des Außenrohres, vor allem aber auch eine ausgezeichnete Führung und Verdrehsicherung für das Innenrohr, wodurch das Zusammenwirken einer am stegförmigen Flügel feststehend angeordneten Spindelmutter mit einer angetriebenen Spindel des Spindeltriebes ermöglicht bzw. betriebssicher wird und eine erhebliche Vereinfachung der gesamten Antriebsanordnung gestattet.

In zweckmäßiger Weiterbildung der Erfindung nach den Unteransprüchen weist das Innenrohr zwei radial auskragende, jeweils eine Längsschlitzausnehmung im Außenrohr durchgreifende stegförmige Flügel auf, die hinsichtlich der Querschnittsform des Innenrohres an sich in beliebiger Winkellage zueinander ausgerichtet sein können, wobei gemäß einer bevorzugten Ausführungsform vorgesehen ist, daß die beiden stegförmigen Flügel des Innenrohres und die diesen zugeordneten Längsschlitzausnehmungen einander in einer Ebene gegenüberliegend angeordnet sind und wobei ferner vorgesehen ist, daß an die beiden stegförmigen Flügel des Innenrohres im Bereich deren freier, das Außenrohr überragender Enden ein das Außenrohr teilweise umgreifendes, die Spindelmutter des Spindeltriebes tragendes Brückenglied, beispielsweise mittels Verschraubung, angeschlossen ist. Bei einer solchen Anordnung ist das Brückenglied vorteilhaft durch ein Formteil, beispielsweise ein Gußteil, dargestellt und die Spindelmutter zweckmäßigerweise durch eine zur Lenksäulenachse achsparallele Gewindebohrung im Brückenglied gebildet.

Hinsichtlich der Anordnung der die Spindel des Spindeltriebes antreibenden Motor-Getriebeeinheit kann je nach den durch die sonstigen Gegebenheiten der Fahrzeugkarosserie oder sonstiger Einbauten vorgezeichneten Verhältnisse zum einen vorgesehen sein, daß die die Gewindespindel des Spindeltriebes antreibende Motor-Getriebeeinheit mit zu diesem und zur Achse der Gewindespindel des Spindeltriebes achsparalleler Ausrichtung am Außenrohr montiert ist.

Zum anderen kann aber auch vorgesehen sein, daß die Motor-Getriebeeinheit einen Winkeltrieb einschließt und in einer Winkellage zur Längsachse des Außenrohres bzw. zu der zu diesem achsparallel angeordneten Spindel des Spindeltriebes angeordnet ist.

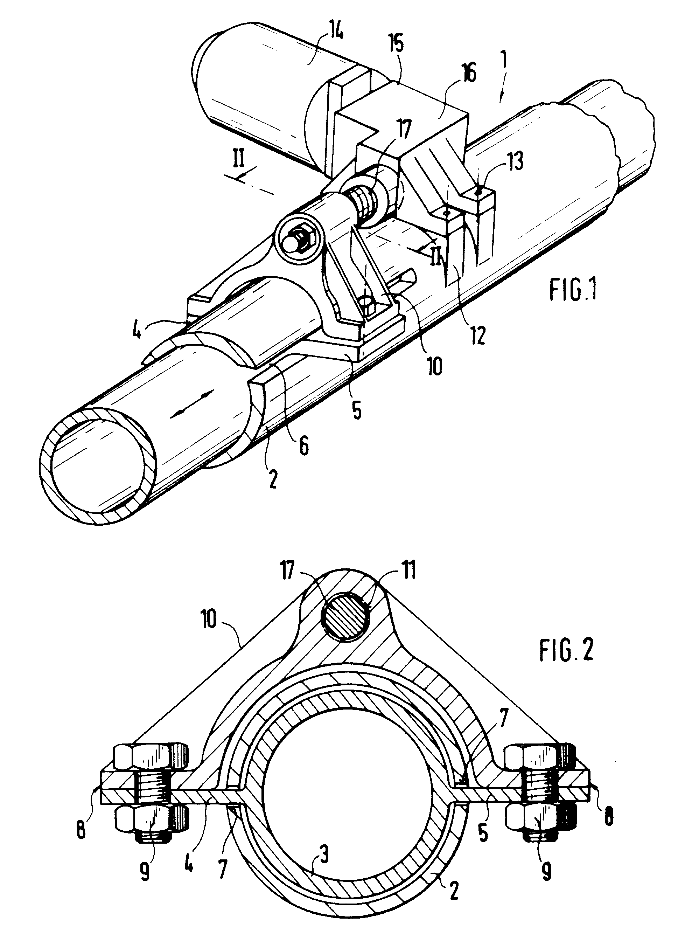

Die Erfindung ist in der nachfolgenden Beispielsbeschreibung anhand eines in der Zeichnung dargestellten Ausführungsbeispiels näher beschrieben.
Es zeigen
- Fig. 1: eine abschnittsweise schaubildliche Darstellung einer axial verstellbaren Lenksäule für Kraftfahrzeuge, und
- Fig. 2: eine Schnittdarstellung entlang der Linie II-II gemäß Fig. 1.

Eine in der Zeichnung nicht in ihrer Gesamtheit dargestellte axial verstellbare Lenksäule 1 für ein Kraftfahrzeug umfasst im wesentlichen ein ortsfest an der Fahrzeugkarosserie befestigtes Außenrohr 2 und ein in diesem koaxial ausgerichtet, jedoch axial verstellbar aufgenommenes Innenrohr 3. Dies ist mit zwei radial auskragenden, stegförmigen Flügeln 4 und 5 versehen, die einander in einer Ebene gegenüberliegend angeordnet sind und denen zwei einander gleichfalls gegenüberliegend angeordnete Längsschlitzausnehmungen 6 im Außenrohr 2 zugeordnet sind. Die lichte Weite der Längsschlitzausnehmungen 6 ist lediglich um eine geringe Spaltbreite 7 größer als die Materialdicke der stegförmigen Flügel 4 und 5, derart, daß eine Verdrehung des Innenrohres 3 gegenüber dem Außenrohr 2 praktisch ausgeschlossen ist. An den außenliegenden, das Außenrohr 2 radial überragenden Endbereichen 8 der stegförmigen Flügel 4 und 5 ist mittels Schraubenbolzen 9 ein im gezeigten Ausführungsbeipsiel durch ein Formteil gebildetes Brückenglied 10 befestigt, welches das Außenrohr 2 abschnittsweise bogenförmig übergreift und in seinem oberen Bereich eine zur Lenksäulenachse achsparallel ausgerichtete, eine Spindelmutter bildende Gewindebohrung 11 aufweist. An das Außenrohr 2 ist ferner eine Tragkonsole 12 angeschlossen, an welcher mittels Schraubenbolzen 13 eines aus einem Motor 14 und einem Getriebe 15 sowie einem Winkel trieb 16 bestehende Motor-Getriebeeinheit montiert ist. Der Motor 14 und das Getriebe 15 sind im rechten Winkel zur Lenksäulenachse ausgerichtet angeordnet. Über den Winkel trieb 16, der eine zur Lenksäulenachse achsparallel ausgerichtet angeordnete Spindel 17 umfasst, erfolgt eine Axialverstellung des Innenrohres 3. Hierzu steht die Spindel 17 mit der die Spindelmutter bildenden Gewindebohrung 11 im Brückenglied 10 in einem treibenden Eingriff.

## Patentansprüche

1. Axial verstellbare Lenksäule für Kraftfahrzeuge, bei der in einem an der Fahrzeugkarosserie ortsfest gehaltenen Außenrohr ein koaxial ausgerichtetes Innenrohr axial verschiebbar aufgenommen ist und das Innenrohr einen radial verlaufenden, eine Längsausnehmung des Außenrohres durchgreifenden Ausleger umfasst, der mit einer am Außenrohr gehaltenen Motor-Getriebeeinheit verbunden ist und über einen Spindeltrieb in axialer Richtung vor- und zurücklaufend antreibbar ist, **dadurch gekennzeichnet**, daß der Ausleger durch wenigstens einen radial auskragenden stegförmigen Flügel (4 oder 5) des Innenrohres (3) gebildet wird und das Außenrohr (2) mit wenigstens einer vom stegförmigen Flügel (4 oder 5) des Innenrohres (3) durchgriffenen Längsschlitzausnehmung (6) versehen ist und daß in Verbindung mit durch die Motor-Getriebeeinheit (14, 15) angetriebener Spindel (17) die Spindelmutter (11) des Spindeltriebes mit dem stegförmigen Flügel (4 oder 5) des Innenrohres (3) verbunden ist.

2. Lenksäule nach Anspruch 1, **dadurch gekennzeichnet**, daß das Innenrohr (3) zwei radial auskragende, jeweils die Längsschlitzausnehmung (6) im Außenrohr (2) durchgreifende stegförmige Flügel (4 und 5) aufweist.

3. Lenksäule nach den Ansprüchen 1 und 2, **dadurch gekennzeichnet**, daß die beiden stegförmigen Flügel (4 und 5) des Innenrohres (3) und die diesen zugeordneten Längsschlitzausnehmungen (6) im Außenrohr (2) einander in einer Ebene gegenüberliegend angeordnet sind.

4. Lenksäule nach den Ansprüchen 1 bis 3, **dadurch gekennzeichnet**, daß der oder die radial auskragenden stegförmigen Flügel (4 und/oder 5) mit dem Innenrohr (3) einteilig ausgebildet sind und die den stegförmigen Flügeln (4 und 5) zugeordneten Längsschlitzausnehmungen (6) im Außenrohr (2) eine der Materialdicke der stegförmigen Flügel (4 und 5) gegenüber lediglich um Spiel- oder Spaltbreite (7) größere lichte Weite aufweisen.

5. Lenksäule nach den Ansprüchen 1 bis 4, **dadurch gekennzeichnet**, daß an die das Außenrohr (2) radial überragenden Bereiche der beiden stegförmigen Flügel (4 und 5) des Innenrohres (3) ein das Außenrohr (2) teilweise umgreifendes, die Spindelmutter (11) des Spindeltriebes tragendes Brückenglied (10) angeschlossen ist.

6. Lenksäule nach den Ansprüchen 1 bis 5, **dadurch gekennzeichnet**, daß das Brückenglied (10) durch ein Formteil gebildet ist und mittels einer zur Lenksäulenachse achsparallel gerichteten Gewindebohrung (11) selbst die Spindelmutter des Spindeltriebes bildet.

7. Lenksäule nach den Ansprüchen 1 bis 6, **dadurch gekennzeichnet**, daß die die Gewindespindel (17) des Spindeltriebes antreibende Motor-Getriebeeinheit (14, 15) mit zu diesem achsparalleler Ausrichtung am Außenrohr (2) montiert ist.

8. Lenksäule nach den Ansprüchen 1 bis 7, **dadurch gekennzeichnet**, daß die Motor-Getriebeeinheit (14, 15) einen Winkeltrieb (16) einschließt und in einer Winkellage zur Längsachse des Außenrohres (2) bzw. zu der zu diesem achsparallel angeordneten Spindel (17) des Spindeltriebes angeordnet ist.

## Claims

1. An axially adjustable steering column for motor vehicles, wherein a co-axially arranged inner tube is axially displaceably held in an outer tube fixed to the vehicle body, and the inner tube has a radially extending arm extending through a longitudinal recess in the outer tube, the said arm being connected to an engine gearbox unit mounted on the outer tube and being drivable backwards and forwards in the axial direction by a worm gear, characterised in that the arm is formed by at least one radially projecting, planar wing (4 or 5) of the inner tube (3), and the outer tube (2) is provided with at least one longitudinal slot-type recess (6) through which the planar wing (4 or 5) of the inner tube (3) extends, and in that, in conjunction with a spindle (17) driven by the engine gearbox unit (14, 15), the spindle nut (11) of the worm gear is connected to the planar wing (4 or 5) of the inner tube (3).

2. A steering column according to claim 1, characterised in that the inner tube (3) has two radially projecting, planar wings (4, 5) each extending through the longitudinal slot-type recess (6) in the outer tube (2).

3. A steering column according to claims 1 and 2, characterised in that the two planar wings (4 and 5) of the inner tube (3) and the associated longitudinal slot-type recesses (6) in the outer tube (2) are arranged opposite each other in one plane.

4. A steering column according to claims 1 to 3, characterised in that the radially projecting, planar wing or wings (4 and/or 5) are formed in one piece with the inner tube (3) and the longitudinal slot-type recesses (6) - associated with the planar wings (4 and 5) - in the outer tube (2) have an inner width greater than the material thickness of the planar wings (4 and 5) only by a clearance or narrow gap width (7).

5. A steering column according to claims 1 to 4, characterised in that a bridge member (10), carrying the spindle nut (11) of the worm gear and partly surrounding the outer tube (2), is connected to those regions of the two planar wings (4 and 5) of the inner tube (3) projecting radially beyond the outer tube (2).

6. A steering column according to claims 1 to 5, characterised in that the bridge member (10) is formed by a shaped part and itself forms the spindle nut of the worm gear by means of a threaded bore (11) arranged axially parallel to the steering column axis.

7. A steering column according to claims 1 to 6, characterised in that the motor gear unit (14, 15), driving the threaded spindle (17) of the worm gear, is mounted on the outer tube (2) so as to be axially parallel to the said worm gear.

8. A steering column according to claims 1 to 7, characterised in that the motor gear unit (14, 15) incorporates an angle drive (16) and is arranged at an angle to the longitudinal axis of the outer tube (2) or the spindle (17) of the worm gear, the said spindle (17) being arranged axially parallel to the said outer tube (2).

## Revendications

1. Colonne de direction réglable axialement pour véhicules automobiles, dans laquelle un tube intérieur, orienté coaxialement, est logé de manière à pouvoir coulisser axialement dans un tube extérieur maintenu fixe sur la carrosserie du véhicule et le tube intérieur comprend un bras s'étendant radialement, traversant un évidement longitudinal du tube extérieur, lequel bras est relié à une unité moteur-transmission fixée sur le tube extérieur et peut être entraîné vers l'avant et vers l'arrière axialement par un mécanisme à broche, caractérisée en ce que le bras est formé par au moins une ailette (4 ou 5) en forme de barrette en porte-à-faux radialement, du tube intérieur (3) et le tube extérieur (2) est pourvu d'au moins un évidement en fente longitudinale (6), traversé par l'ailette (4 ou 5) en forme de barrette du tube intérieur (3) et en ce qu'en liaison avec une branche (17) entraînée par l'unité moteur-transmission (14, 15), l'écrou de broche (11) du mécanisme à broche est relié avec l'ailette (4 ou 5) en forme de barrette du tube intérieur (3).

2. Colonne de direction selon la revendication 1, caractérisée en ce que le tube intérieur (3) présente deux ailettes (4 et 5) en forme de barrettes, en porte-à-faux radialement, traversant chacune l'évidement en fente longitudinale (6) pratiqué dans le tube extérieur (2).

3. Colonne de direction selon les revendications 1 et 2, caractérisée en ce que les deux ailettes (4 et 5) en forme de barrettes du tube intérieur (3) et les évidements en fente longitudinale (6) associés à celles-ci, pratiqués dans le tube extérieur (2) sont disposés en vis-à-vis dans un plan.

4. Colonne de direction selon les revendications 1 à 3, caractérisée en ce que la ou les ailettes (4) et/ou (5) en forme de barrettes, en porte-à-faux radialement, sont réalisées d'une seule pièce avec le tube extérieur (3) et les évidements en fente longitudinale (6), associés aux ailettes (4 et 5) en forme de barrettes, pratiqués dans le tube extérieur, présentent une ouverture intérieure supérieure uniquement de la largeur du jeu ou de la fente (7), par rapport à l'épaisseur de la matière des ailettes (4 et 5) en forme de barrettes.

5. Colonne de direction selon les revendications 1 à 4, caractérisée en ce qu'aux zones dépassant radialement du tube extérieur (2), des deux ailettes (4 et 5) en forme de barrettes du tube extérieur (3), se raccorde un organe en pont (10) entourant partiellement le tube extérieur (2), portant l'écrou de broche (11) du mécanisme à broche.

6. Colonne de direction selon les revendications 1 à 5, caractérisée en ce que l'organe en pont (10) est formé par une pièce façonnée et forme l' écrou de broche du mécanisme à broche au moyen d'un trou taraudé (11) orienté parallèlement à l'axe de la colonne de direction.

7. Colonne de direction selon les revendications 1 à 6, caractérisée en ce que l'unité moteur-transmission (14, 15), entraînant la broche filetée (17) du mécanisme à broche, est montée avec cette orientation parallèle à l'axe, sur le tube extérieur (2).

8. Colonne de direction selon les revendications 1 à 7, caractérisée en ce que l'unité moteur-transmission (14, 15) comprend un engrenage d'angle (16) et est placée dans une position angulaire par rapport à l'axe longitudinal du tube extérieur (2) ou par rapport à la broche (17), parallèle à l'axe de celui-ci du mécanisme à broche.
